# EUROPÄISCHE PATENTANMELDUNG

(11) **EP 1 052 115 A2**
(43) Veröffentlichungstag der Anmeldung: **15.11.2000**
(21) Anmeldenummer: 00108316.1
(22) Anmeldetag: 15.04.2000
(51) Int. Cl.: B44C 1/17, B41M 5/025, B41M 3/12, G03G 7/00

(54) **Verfahren und Vorrichtung zum Aufbringen von Dekors und/oder Zeichen auf Glas-, Glaskeramik- und Keramikerzeugnisse**

(30) Priorität: 12.05.1999 DE 19921923
(71) Anmelder: Schott Glas, 55122 Mainz (DE); Zimmer, Michael, 66133 Saarbrücken (DE)
(72) Erfinder: Weinberg, Waldemar Dr., 25368 Kiebitzreihe (DE); Zimmer, Michael, 66133 Saarbrücken (DE)
(74) Vertreter: Fuchs Mehler Weiss & Fritzsche

(57) **Zusammenfassung**

Auf Glas-, Glaskeramik- und Keramikerzeugnisse werden in großem Umfang zur Erzielung gewünschter ästhetischer Eindrücke Dekors und auch Beschriftungen sowie Symbole aufgebracht. Gemäß dem Stand der Technik erfolgt dies entweder durch direktes Bedrucken mittels der Siebdrucktechnik oder mittelbar durch Aufbringen eines "Abziehbildes", das zuvor auf einem entsprechenden diskreten Trägerbogen mittels Siebdruck oder durch elektrophotographische Kopierverfahren mit den Dekors bzw. Beschriftungen und Symbolen versehen worden ist. direkt durch elektrophotographische Kopierverfahren.

Ausgehend von dieser Transfertechnik sieht die Erfindung vor:
- Bereitstellen eines mit getaktetem Vorschub bewegten bandförmigen Trägers, der mit einem Transfermittel beschichtet ist,
- Bedrucken des beschichteten bandförmigen Trägers mit einem wärmebeständigen Toner taktweise mit den aufzubringenden Dekors und/oder Zeichen, und
- registerhaltiges, getaktetes Übertragen des jeweiligen aufgedruckten Tonerbildes auf das zugeordnete Glas-, Glaskeramik- und Keramikerzeugnis unter Ablösen des Transfermittels von dem bandförmigen Träger.

Diese Maßnahme ermöglicht eine einfache Möglichkeit zur Erzielung von verzerrungsfreien Abbildungen auf den Erzeugnissen.

## Beschreibung

Die Erfindung bezieht sich auf ein Verfahren zum Aufbringen von Dekors und/oder Zeichen auf Glas-, Glaskeramik- und Keramikerzeugnisse unter Verwendüng eines Transfermittels.

Die Erfindung betrifft ferner eine Vorrichtung zum Aufbringen derartiger Dekors und/oder Zeichen unter Anwendung eines Transfermittels.

Auf Glas-, Glaskeramik- und Keramikerzeugnisse werden im großen Umfang zur Erzielung gewünschter ästhetischer Eindrücke Dekors aufgebracht. Bei bestimmten derartigen Erzeugnissen müssen auch Beschriftungen, Kennzeichnungen oder dergleichen aufgebracht werden, um z.B. dem Benutzer unmittelbar erforderliche Informationen zu geben. Als typisches Beispiel seien hier die Glaskeramikplatten für Kochfelder genannt, die neben der Marke, z.B. CERAN® , auch andere Bedien- und Zustandshinweise, sowie, je nach Kundenwunsch, auch insbesondere farbige Dekors aufweisen.

Zum Aufbringen derartiger Dekors und/oder Zeichen sind verschiedene Verfahren bekannt geworden, von denen bisher zwei in der Praxis Bedeutung erlangt haben.

Bei dem ersten typischen Verfahren werden Keramikfarben mittels einschlägiger Druck-Techniken direkt auf die Glas- und Keramikerzeugnisse aufgedruckt, die Farbe zunächst wischfest getrocknet und danach eingebrannt, wobei im Fall der erwähnten Glaskeramikplatten für Kochfelder der Farbeinbrand typischerweise während der Keramisierung stattfindet. In diesem Fall erfolgt das Aufdrucken daher nicht auf die fertige Glaskeramikplatte, sondern bereits auf den zu keramisierenden Grünling.

Durch das vorgenannte Verfahren wird dadurch ein dauerhafter Druck auf das Glas- bzw. Keramikerzeugnis erzielt.

Bei dem im allgemeinen für das vorgenannte Druckverfahren verwendeten Siebdruckverfahren muß zunächst eine Siebdruckschablone hergestellt werden. Dazu wird das Sieb aus feinmaschigem Textil- oder Drahtgewebe, das über einen Druckrahmen gespannt wird, an den bildfreien Stellen mit einer aus Papier geschnittenen, mit Fettusche gezeichneten oder fotographisch hergestellten Schablone abgedeckt. Mittels dieser Siebdruckschablone werden dann die keramischen Farben auf das Glas- bzw. Keramikerzeugnis direkt aufgebracht.

Die Herstellung der Siebdruckschablone bei dem bekannten Verfahren ist sehr aufwendig und für Einzelanfertigungen unrentabel. Zudem muß mit Hilfe einer Rakel die Druckfarbe durch die offenen Stellen der Siebdruckschablone manuell oder in Siebdruckmaschinen aufgebracht werden. Das Siebdruckverfahren ist weiterhin ein Naßverfahren, bei dem mit Drucköl angepastete, keramische Farbpigmente als Druckfarbe eingesetzt werden, so daß relativ große und teuere Maschinen mit Trocknern notwendig sind, und weiterhin, insbesondere im Hinblick auf die beim Herstellungsprozeß benötigten Lösungsmittel große Arbeitsschutz- und Umweltprobleme bestehen. Die in dem Drucköl vorhandenen Lösungsmittel verdampfen relativ leicht, so daß aufwendige und teure Arbeitsschutzmaßnahmen getroffen werden müssen, und zum anderen separate Filterungsanlagen erforderlich sind. Überdies sind beim Siebdruckverfahren, wie auch beim Offsetdruckverfahren, mehrere hintereinander geschaltete Druckvorgänge für die verschiedenen Farben (z.B. Cyan, Magenta, Gelb und Schwarz) erforderlich, was weithin zu sehr groß ausgestalteten Anlagen führt.

Desweiteren besteht bei dem bekannten Druckverfahren das Problem, daß die Reproduzierbarkeit der Farben bei einer größeren Stückzahl nicht mehr gewährleistet werden kann, und zudem bereits nach einer geringen Stückzahl, d.h. in etwa nach 100 Druckvorgängen, die Siebdruckschablone gereinigt werden muß.
Zum anderen ist bei dem Siebdruckverfahren das Auflösungsvermögen des aufgebrachten Buntdrucks durch das Raster der Siebdruckschablone begrenzt. Dies führt dazu, daß die bedruckten Keramik- oder Glaserzeugnisse häufig bezüglich der Glätte, der Homogenität und der Auflösung des Farbdrucks nicht zufriedenstellend sind. Weiterhin müssen häufig, um eine gewünschte Güte erzeugen zu können, mehrere Sonderfarben verwendet werden.

Bei dem zweiten typischen Verfahren werden Keramikfarben nicht direkt auf die Glas- und Keramikerzeugnisse aufgebracht, sondern auf ein Transfermittel, wie z.B. ein mit Gummi-Arabikum beschichtetes Papier. Dieses derart vorbereitete Transfermittel wird daraufhin auf das Keramik- oder Glaserzeugnis an gewünschter Position aufgelegt und angefeuchtet, wodurch sich das Papier unter Belassung der Farben auf dem Erzeugnis entfernen läßt (Schiebebild). Auch ist eine Übertragung mittels Wärme (heat release) bekannt. Schließlich wird dann das Erzeugnis in an sich bekannter Weise gebrannt, was zu einer Verschmelzung der keramischen Farben mit dem Erzeugnis führt. Es wird somit ein dauerhafter Druck auf dem Keramik- bzw. Glaserzeugnis erzielt.

Dieses zweite typische Verfahren arbeitet nach dem Prinzip des Abziehbildes.

Es ist dabei bekannt, die Keramikfarben mittels einschlägiger Drucktechniken, insbesondere mittels Siebdruck, auf das Transfermittel zu bringen, mit den erläuterten Nachteilen der Siebdrucktechnik.

Es ist daher auch durch die DE 44 13 168 C2 bekannt geworden, anstelle üblicher Keramikdruckfarben einen neuartigen keramischen Toner zu verwenden, d.h. keramische Farbzusammensetzungen, die aus feinen Teilchen aus keramischen Pigmenten, Flußmittel (Glas), Bindemittelharz(en) und üblichen Additiven bestehen und mittels eines elektrophotographischen Reproduktionsverfahrens (Elektrokopierverfaren) auf das Transfermittel aufgetragen werden.

Unter Zuhilfenahme dieser Maßnahmen gelingt es, ein Verfahren zu Herstellung von dekorierten Keramik- und Glaserzeugnissen zu schaffen, das die oben genannten Probleme der im Stand der Technik bekannten Druckverfahren überwindet. Es kann ein dekoriertes Keramik- und Glaserzeugnis hergestellt werden, das hinsichtlich der Feinheit und Auflösung des Dekors (des Drucks) den bekannten Erzeugnissen überlegen ist.

Das bekannte Verfahren erlaubt auch ein vereinfachtes Aufbringen der Bilder auf das Transfermittel.
Durch Einlesen der Daten des gewünschten, auf dem Keramik- oder Glaserzeugnis aufzubringendes Bildes z.B. mittels eines digitalen Farbscanners oder durch Verwendung originärer Graphikdaten und Übertragung dieser Daten mittels eines Personal Computers in den Bildspeicher der elektrophotographischen Reproduktionseinrichtung, z.B. eines Laserdruckers, wird vorteilhafterweise dem Benutzer erstmals die Möglichkeit gegeben, auch bei nur sehr geringen herzustellenden Stückzahlen Änderungen ohne zusätzlichen Aufwand, wie z.B. in der Farbabstufung, der Rasterung, vorzunehmen. Auch können alle mittels der heutigen Computertechnologie möglichen Grafiken und/oder Abänderungen direkt auf das Tansfermittel übertragen werden.

Der entscheidende Nachteil dieses bekannten Verfahrens besteht darin, daß die Bilder auf diskrete Bögen von Transfermitteln gedruckt werden, die einzeln in Verbindung mit weiteren Verfahrensschritten gehandhabt werden, um das Bild von diesen diskreten Bögen auf das Glas- bzw. Keramikerzeugnis zu bringen. Abgesehen von dem Mehraufwand für die Herstellung der Bilder auf dem Erzeugnis, bedingt durch die Einzelbehandlung der diskreten Bögen und das paßgenaue Aufbringen der Bilder auf das Glas- bzw. Keramikerzeugnis, besteht auch die Gefahr, daß die Bilder des angefeuchteten oder erwärmten Transfermittels beim Aufbringen und Abziehen des Trägers verrutschen, wie das von Abziehbildern her hinlänglich bekannt ist, so daß die Bilder verzerrt aufgebracht werden, was dann nicht den Toleranzanforderungen an das farbige Produkt entspricht.

Der Erfindung liegt die Aufgabe zugrunde, das eingangs bezeichnete Verfahren so zu führen bzw. die eingangs bezeichnete Vorrichtung so auszubilden, daß auf einfache Weise ein paßgenaues Aufbringen des Bildes möglich ist.

Die Lösung dieser Aufgabe gelingt gemäß der Erfindung für das Verfahren mit den Schritten:
- Bereitstellen eines mit getaktetem Vorschub bewegten bandförmigen Trägers, der mit einem Transfermittel beschichtet ist,
- Bedrucken des beschichteten bandförmigen Trägers mit einem wärmebeständigen Toner taktweise mit den aufzubringenden Dekors und/oder Zeichen, und
- registerhaltiges, getaktetes Übertragen des jeweiligen aufgedruckten Tonerbildes auf das zugeordnete Glas-, Glaskeramik- und Keramikerzeugnis unter Ablösen des Transfermittels von dem bandförmigen Träger.

Hinsichtlich der Vorrichtung gelingt die Lösung der Aufgabe mit:
- einer Vorrichtung zum Bereitstellen eines mit getaktetem Vorschub bewegten bandförmigen Trägers, der mit einem Transfermittel beschichtet ist,
- einer Druckeinheit zum Bedrucken des beschichtetem bandförmigen Trägers mit einem wärmebeständigen Toner taktweise mit den aufzubringenden Dekors und/oder Zeichen, und
- einer Übertragungsstation, die in einem vorgegebenen Abstand hinter der Druckstation angeordnet ist zum registerhaltigen, getakteten Übertragen des jeweiligen aufgedruckten Tonerbildes auf das zugehörige Glas-, Glaskeramik- und Keramikerzeugnis unter Ablösen des Transfermittels von dem bandförmigen Träger.

Dadurch, daß die für ein Erzeugnis bestimmten Dekors und/oder Zeichen taktweise als Bild auf dem laufenden Band wieder aufgedruckt werden, können sie auf einfache Weise registerhaltig auf das in einer vorgegebenen Position zum Band angeordneten Erzeugnis gebracht werden.

Gemäß einer Ausgestaltung der Erfindung finden als Transfermittel vorzugsweise die einschlägig bekannten Materialien wie Thermowachs und Gummiarabicum Anwendung.

Zum Bedrucken des beschichteten bandförmigen Trägers wird vorzugsweise ein keramischer Toner verwendet, d.h. keramische Farbzusammensetzungen, die aus feinen Teilchen aus keramischen Pigmenten, Flußmittel (Glas, Bindemittelharzen) und üblichen Additiven bestehen, die vorzugsweise mittels eines elektrophotographischen Reproduktionsverfahrens (Elektrokopierverfahren) auf das Transfermittel aufgetragen werden.

Vorzugsweise wird das aufgedruckte Tonerbild mittels Wärme, z.B. mittels Infrarotstrahlen fixiert, insbesondere dann, wenn mehrere Lagen von keramischen Tonern übereinander gedruckt werden.

Für die Bereitstellung des bandförmigen Trägers stehen dem Fachmann verschiedene Möglichkeiten zur Verfügung. Gemäß einer ersten Ausgestaltung der Erfindung wird der bandförmige Träger durch Abwickeln von einer Vorratsrolle bereitgestellt. Alternativ dazu kann die Bereitstellung des bandförmigen Trägers in Form eines Endlosbandes erfolgen.

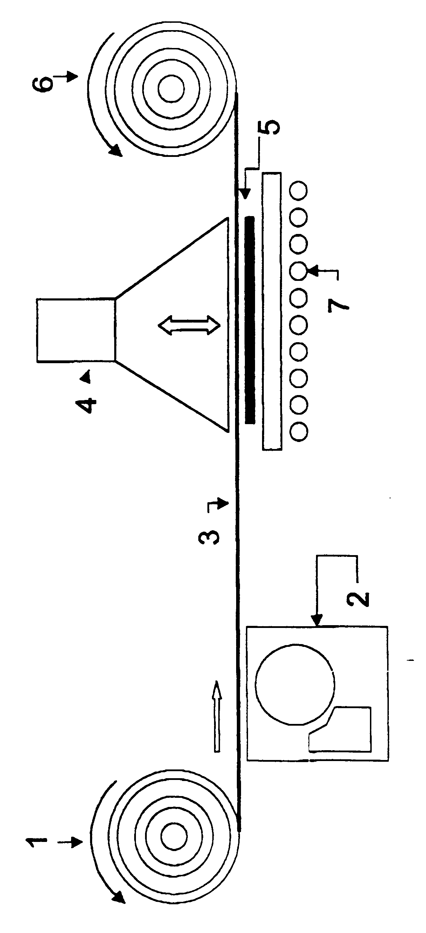

Weitere Ausgestaltungen und Vorteile der Erfindung ergeben sich anhand der Beschreibung eines in der Zeichnung dargestellten Ausführungsbeispieles.

Auf einer Vorratsrolle in Form einer Abwickelwalze 1 ist ein bandförmiger Träger in Form eines Papierbandes oder eines Folienbandes, der mit einem Transfermittel wie Gummiarabicum oder Thermowachs beschichtet ist, bevorratet. Von dieser Abwickelwalze 1 wird der bandförmige Träger 3 taktweise einer elektrophotographischen Druckeinheit 2 zugeführt.

In dieser Druckeinheit 2, die einen konventionellen Aufbau gemäß dem Stand der Technik hat, erfolgt ein- bis mehrfarbig entsprechend dem aufzubringenden Dekor und/oder den aufzubringenden Zeichen die Belegung der Trägeroberfläche mit einem speziellen Toner, vorzugsweise mit dem eingangs beschriebenen keramischen Toner oder einem sonstigen wärmetauglichen Toner. Vorzugsweise werden die Tonerlagen, beispielsweise mittels Wärme in Form von Infrarotstrahlen, fixiert.

Im nächsten Takt wird der bandförmige Träger 3 in einer Übertragungseinheit 4 über einem örtlich justierten festen Substrat 5, welches durch das Glas-, Glaskeramik- bzw. Keramikerzeugnisse gebildet wird, auf dem die Dekors bzw. Zeichen aufzubringen sind, paßgenau angehalten. In der Übertragungseinheit 4 senkt sich von oben ein erwärmter Stempel ab, und preßt den bandförmigen Träger mit den Tonerlagen auf das feste Substrat 5. Durch die Wärme des Stempels wird das Thermowachs oder das ansonsten verwendete Transfermittel, auf dem Papier verflüssigt und die darauf befindlichen Tonerlagen werden auf das Substrat 5 übertragen. Im Kontakt mit dem kühleren Substrat erstarrt das Wachs wieder und fixiert damit die Tonerlage auf dem Substrat 5. Mittels dieses klassischen "heat-release-Verfahrens" dürfte sich auch das Tonerbild übertragen lassen, welches auf einer Gummiarabicum-Schicht anstelle einer Wachsschicht aufgebracht ist, obwohl dort die Wasserablösung bevorzugt ist.

Das mit dem Dekor bzw. den Zeichen versehenes Substrat 5 kann dann mittels eines Transportbandes 7, welches senkrecht zur Zeichenebene verläuft, einer weiteren Verarbeitung zugeführt werden. Gleichzeitig wird mittels des Transportbandes ein nächstes Substrat paßgenau zum Band 3 der Wärmeübertragungseinheit 4 zugeführt.

Das entschichtete Trägerband 3 wird auf eine Aufrollwalze 6 aufgewickelt und anschließend entsorgt oder wieder neu in einer entsprechenden Station mit dem Transfermittel beschichtet.

Es ist auch denkbar, ein Endlosträgerband zu verwenden, welches nach seiner Entschichtung unmittelbar einer Beschichtungseinheit und von dort aus direkt der Druckeinheit 2 zugeführt wird.

## Patentansprüche

1. Verfahren zum Aufbringen von Dekors und/oder Zeichen auf Glas-, Glaskeramik- und Keramikerzeugnisse, mit den Schritten:
- Bereitstellen eines mit getaktetem Vorschub bewegten bandförmigen Trägers, der mit einem Transfermittel beschichtet ist,
- Bedrucken des beschichteten bandförmigen Trägers mit einem wärmebeständigen Toner taktweise mit den aufzubringenden Dekors und/oder Zeichen, und
- registerhaltiges, getaktetes Übertragen des jeweiligen aufgedruckten Tonerbildes auf das zugeordnete Glas-, Glaskeramik- und Keramikerzeugnis unter Ablösen des Transfermittels von dem bandförmigen Träger.

2. Verfahren nach Anspruch 1, **dadurch gekennzeichnet,** daß das Transfermittel Gummiarabicum ist.

3. Verfahren nach Anspruch 1, **dadurch gekennzeichnet,** daß das Transfermittel Thermowachs ist.

4. Verfahren nach einem der Ansprüche 1 bis 3, **dadurch gekennzeichnet,** daß das Übertragen des Tonerbildes nach dem heat-release-Verfahren erfolgt.

5. Verfahren nach einem der Ansprüche 1 bis 4, **dadurch gekennzeichnet,** daß als Toner ein keramischer Toner verwendet wird.

6. Verfahren nach Anspruch 5, **dadurch gekennzeichnet,** daß das aufgedruckte Tonerbild mittels Wärme fixiert wird.

7. Verfahren nach einem der Ansprüche 1 bis 6, **dadurch gekennzeichnet,** daß die Bereitstellung des bandförmigen Trägers in Form eines Endlosbandes erfolgt.

8. Verfahren nach einem der Ansprüche 1 bis 6, **dadurch gekennzeichnet,** daß der bandförmige Träger durch Abwickeln von einer Vorratsrolle bereitgestellt wird.

9. Vorrichtung zum Aufbringen von Dekors und/oder Zeichen auf Glas-, Glaskeramik- und Keramikerzeugnisse, mit:
- einer Vorrichtung (1, 6) zum Bereitstellen eines mit getaktetem Vorschub bewegten bandförmigen Trägers (3), der mit einem Transfermittel beschichtet ist,
- einer Druckeinheit (2) zum Bedrucken des beschichteten bandförmigen Trägers (3) mit einem wärmebeständigen Toner taktweise mit den aufzubringenden Dekors und/oder Zeichen, und
- einer Übertragungsstation (4), die in einem vorgegebenen Abstand hinter der Druckstation (2) angeordnet ist zum registerhaltigen, getakteten Übertragen des jeweiligen aufgedruckten Tonerbildes auf das zugehörige Glas-, Glaskeramik- und Keramikerzeugnis (5) unter Ablösen des Transfermittels von dem bandförmigen Träger (3).

10. Vorrichtung nach Anspruch 9, **dadurch gekennzeichnet,** daß die Druckstation (2) durch eine elektrophotographische Druckeinheit gebildet ist.

11. Vorrichtung nach Anspruch 9 oder 10, **dadurch gekennzeichnet,** daß die Übertragungsstation (4) durch einen erwärmbaren Stempel gebildet wird, mittels dem der bandförmige Träger mit den aufgedruckten Tonerlagen auf das Erzeugnis (5) gepreßt wird unter Ablösen des erwärmten Transfermittels von dem bandförmigen Träger.
